# EUROPEAN PATENT SPECIFICATION

(11) **EP 3 355 431 B1**
(45) Date of publication and mention of the grant of the patent: **08.05.2024**
(21) Application number: 16847985.5
(22) Date of filing: 31.08.2016
(51) Int. Cl.: H02H 3/087, H01H 9/54, H01H 33/59, H02H 3/02, H02H 3/06

(54) **CASCADED FULL-BRIDGE HIGH-VOLTAGE DC CIRCUIT BREAKER**
KASKADIERTER VOLLBRÜCKEN-HOCHSPANNUNGS-GLEICHSTROMSCHUTZSCHALTER
DISJONCTEUR À COURANT CONTINU HAUTE TENSION À PONTS COMPLETS EN CASCADE

(30) Priority: 25.09.2015 CN 201510618462
(43) Date of publication of application: 01.08.2018
(73) Proprietor: GLOBAL ENERGY INTERCONNECTION RESEARCH INSTITUTE CO., LTD., Beijing 102211 (CN); State Grid Corporation of China, Beijing 100031 (CN)
(72) Inventor: WEI, Xiaoguang, Beijing 102209 (CN); ZHOU, Wandi, Beijing 102209 (CN); HE, Zhiyuan, Beijing 102209 (CN); ZHANG, Sheng, Beijing 102209 (CN); LIU, Yuan, Beijing 102209 (CN); GAO, Yang, Beijing 102209 (CN); CHEN, Longlong, Beijing 102209 (CN); YANG, Bingjian, Beijing 102209 (CN)
(74) Representative: V.O.
(86) International application number: PCT/CN2016/097698
(87) International publication number: WO 2017/050103

(56) References cited:
- WO-A1-2012/100831
- WO-A1-2014/131298
- CN-A- 1 598 988
- CN-A- 102 522 882
- CN-A- 103 178 486
- CN-A- 103 280 763
- CN-A- 104 635 151
- CN-A- 104 635 151
- CN-A- 104 767 170
- CN-A- 104 901 269
- CN-A- 105 356 411
- CN-A- 105 790 234
- US-A1- 2005 146 814
- US-A1- 2014 217 833

## Description

### TECHNICAL FIELD

The invention relates to the technical field of power electronics, and particularly to an improved cascaded full-bridge high-voltage direct current circuit breaker.

### BACKGROUND

Along with application of a Voltage Source Converter (VSC)-based multi-terminal flexible direct current and direct current grid technology, a high-voltage direct current circuit breaker becomes one of key equipment ensuring stable, safe and reliable operation of a system. A direct current circuit breaker technology adopting both a mechanical switch and a full-controlled power electronic switch has both characteristic of low loss of the mechanical switch and characteristic of quick breaking of the power electronic switch, and is a most effective technical approach for direct current breaking applied in a present high-voltage power transmission system. When being applied to a flexible multi-terminal direct current and direct current grid including large capacity overhead lines, except for the characteristics of quickness, low loss and the like, strong current breaking and quick reclosing capabilities should be also required.

Up to now, hybrid direct current circuit breakers published to be successfully researched and developed at home and abroad are limited to breaking capability of a single full-controlled device, and all have the problem of relatively low breaking current (not larger than 10kA), so that it is difficult to meet a requirement of a practical system on a breaking current. A cascaded full-bridge direct current circuit breaker disclosed in China remarkably improves own breaking current capability (up to 15kA). However, a voltage stored by a capacitor in each module unit cannot be quickly released after breaking is completed, so that there exists a risk that short-circuit occurs and thus the direct current circuit breaker is damaged during quick reclosing. In addition, a problem of relatively high heat of a bleeder resistor in the circuit breaker due to a relatively strong leakage current, after breaking of the circuit breaker is completed, is also required to further be optimized.

Therefore, it is necessary to provide a cascaded full-bridge high-voltage direct current circuit breaker capable of effectively preventing occurrence of a direct current short-circuit phenomenon in a full-bridge module and implementing safe, reliable and quick reclosing of the direct current circuit breaker.

It is noted that Chinese Patent Publication No. CN 104635151 A discloses a cascade full-bridge direct-current circuit breaker low-voltage equivalent test circuit and a detection method thereof. It is noted that Chinese Patent Publication No. CN 102522882 A discloses a protection circuit of a converter power component; and each converter comprises at least one power device. It is noted that PCT publication WO 2014/131298 A1 relates to a direct-current circuit breaker and an implementation method therefor. It is noted that Chinese Patent Publication No. CN 1598988 A relates to the inversion device used in the composite flexible turn-off current limiting circuit breaker and is composed of the diode bridge circuit and insulated gate bipolar transistor. It is noted that Chinese Patent Publication No. CN 104901269 A disclose an all-solid-state DC breaker and a control method thereof.

It is noted that US Patent Publication No. US 2005/146814 A1 relates to a circuit breaker device comprising a main branch and an auxiliary branch in parallel. It is noted that US Patent Publication No. US 2014/ 217833 A1 discloses a hybrid high-voltage DC breaker consisting of a plurality of completely identical breaker modules connected in series.

### SUMMARY

In order to meet a requirement of a conventional art, the invention provides an improved cascaded full-bridge high-voltage direct current circuit breaker. The invention is set out in the appended set of claims.

With an improved cascaded full-bridge high-voltage direct current circuit breaker, a quick reclosing method thereof and a storage medium provided by the embodiments of the invention, quick reclosing of the cascaded full-bridge high-voltage direct current circuit breaker within several milliseconds may be implemented.

### BRIEF DESCRIPTION OF DRAWINGS

The embodiments of the invention will further be described below in combination with drawings.
FIG. 1 is a topological structure diagram of an improved cascaded full-bridge high-voltage direct current circuit breaker according to the invention.
FIG. 2 is a topological structure diagram of a first type of full-bridge module unit according to the invention.
FIG. 3 is a topological structure diagram of a second type of full-bridge module unit not being part of the invention.
FIG. 4 is a diagram of a quick reclosing discharge path of a full-bridge module unit not being part of the invention.
FIG. 5 is a diagram of a discharge path of a full-bridge module unit shown in FIG. 2 according to the invention.
FIG. 6 is a diagram of a discharge path of a full-bridge module unit shown in FIG. 3 not being part of the invention.
FIG. 7 is a diagram of a current path when an improved cascaded full-bridge high-voltage direct current circuit breaker is quickly reclosed at a failure line according to the invention.
FIG. 8 is a diagram of a current path when an improved cascaded full-bridge high-voltage direct current circuit breaker is quickly reclosed at a healthy line according to the invention.

### DETAILED DESCRIPTION

The embodiments of the invention will be described below in detail. Examples of the embodiments are shown in the drawings, in which reference signs which are always the same or similar represent the same or similar components or components with the same or similar functions. The embodiments described below with reference to the drawings are exemplary and intended to explain the invention, and may not be understood as limits to the invention.

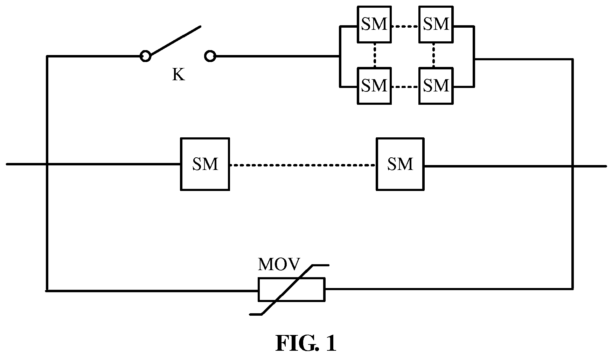

An improved cascaded full-bridge high-voltage direct current circuit breaker provided by the invention, as shown in FIG. 1, is specifically as follows.

The improved cascaded full-bridge high-voltage direct current circuit breaker includes a primary through-current branch, a current transfer branch and an energy absorption branch, which are connected in parallel respectively.

The primary through-current branch is configured to conduct a load current.

The current transfer branch is configured to transfer a failure current to the energy absorption branch when a power system fails.

The energy absorption branch is configured to consume and absorb the failure current.

### 1. The primary through-current branch

In the embodiment, the primary through-current branch includes a mechanical switch K and a full-bridge module circuit, which are connected in series, in which:
①: the full-bridge module circuit includes one full-bridge module unit or at least 2n full-bridge module units, where n is greater than or equal to 1; and
②: the full-bridge module circuit is formed by at least one full-bridge module parallel branch connected in series; and
the full-bridge parallel branch is formed by at least one full-bridge module unit connected in parallel.

### 2. The current transfer branch

In the embodiment, the current transfer branch includes at least two full-bridge module units connected in series.

The number of the full-bridge module units in the current transfer branch is much larger than the number of the full-bridge module units in the primary through-current branch.

### 3. The energy absorption branch

In the embodiment, the energy absorption branch includes a lightning arrester.

In the embodiment, a structure of the full-bridge module unit may be one of following two types of topological structures.

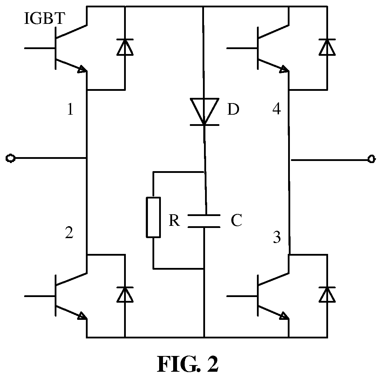

The first type of topological structure:
as shown in FIG. 2, the full-bridge module unit includes a first resistor R, a first capacitor C, a first diode D and four full-controlled power electronic devices.
①: the four full-controlled power electronic devices form a power module of a full-bridge structure;
②: the first capacitor C and the first diode D, being connected in series, are connected between an upper bridge arm and lower bridge arm of the power module; and
③: the first resistor R is connected in parallel with two ends of the first capacitor C.

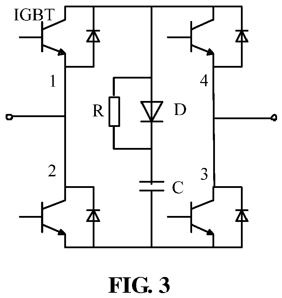

The second type of topological structure:
as shown in FIG. 3 not being part of the invention, the full-bridge module unit includes a second resistor R, a second capacitor C, a second diode D and four full-controlled power electronic devices.
①: the four full-controlled power electronic devices form a power module of a full-bridge structure;
②: the second capacitor C and the second diode D, being connected in series, are connected between an upper bridge arm and lower bridge arm of the power module and
③: the second resistor R is connected in parallel with two ends of the second diode D.

A quick reclosing method for an improved cascaded full-bridge high-voltage direct current circuit breaker provided by the embodiments of the invention includes the following steps.

In step 1, all full-bridge module units in a current transfer branch are triggered.

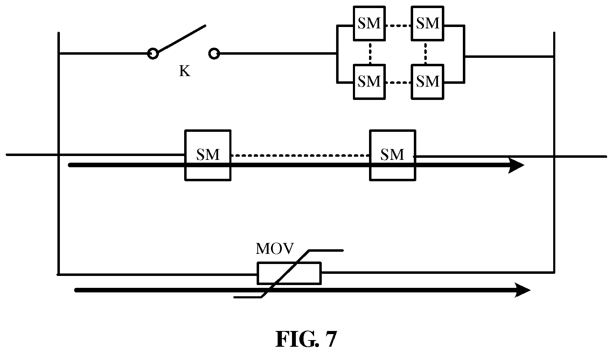

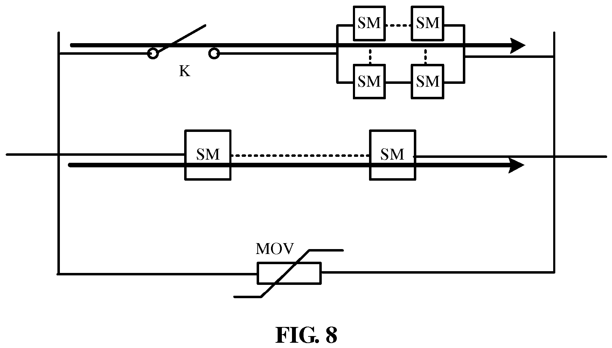

In step 2, whether the direct current circuit breaker is reclosed at a failure line or a healthy line is determined:
①: if the direct current circuit breaker is reclosed at the failure line, the current transfer branch is blocked, and a failure current is transferred to an energy absorption branch, as shown in FIG. 7;
②: if the direct current circuit breaker is reclosed at the healthy line, each full-bridge module unit in a primary through-current branch are triggered, a mechanical switch of the primary through-current branch is closed on after the each full-bridge module unit is triggered, and a load current is conducted through the primary through-current branch, as shown in FIG. 8;
③: all full-bridge module units in the current transfer branch are blocked, and reclosing of the direct current circuit breaker is completed after breaking within several milliseconds, thereby returning to a steady state of the circuit breaker.

There is further disclosed a computer-readable storage medium, which includes a set of instructions, the instructions being configured to execute the quick reclosing method.

In a breaking process of the direct current circuit breaker, the failure current flows through the diode and charges a capacitor of each full-bridge module unit of the current transfer branch , and thus a transient breaking voltage is generated. Since a conduction loss of a single diode is extremely low, there is no influence on a generation speed of the transient breaking voltage in the breaking process of the direct current circuit breaker, and it is further ensured that there is no influence on a breaking speed.

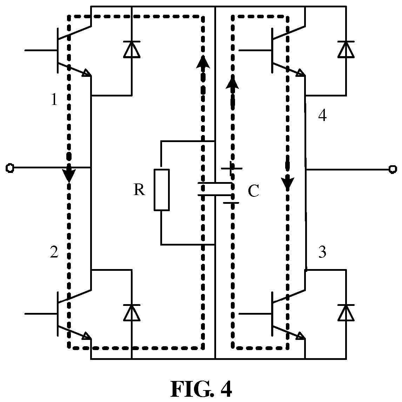

As shown in FIG. 4 not being part of the invention, after breaking of a direct current circuit breaker in the conventional art is completed, each capacitor of the cascaded full-bridge direct current circuit breaker is charged by current of the system and thus stores a voltage of certain amplitude. The voltage is not higher than a withstanding voltage value of a single power device. The voltage of the capacitor is discharged quite slowly, since resistance of a resistor connected in parallel with two ends of the capacitor is relatively high, and usually is a level of tens of kilo-ohms. In a multi-terminal direct current and direct current grid, it is required that, after a temporary failure, a system is reclosed at about a hundred milliseconds. In this case, a capacitor of a full-bridge module of a cascaded full-bridge direct current circuit breaker still stores a relatively high voltage, and if the circuit breaker is put into operation at this time, the capacitor in the full-bridge module may directly discharge a power device, and there exists a risk of damaging the direct current circuit breaker.

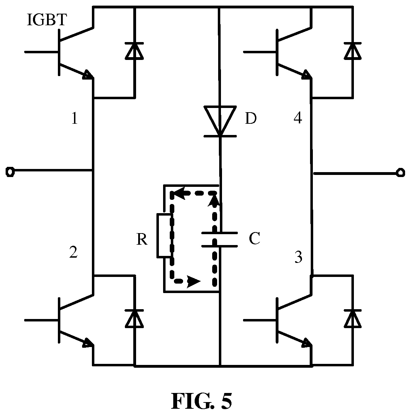

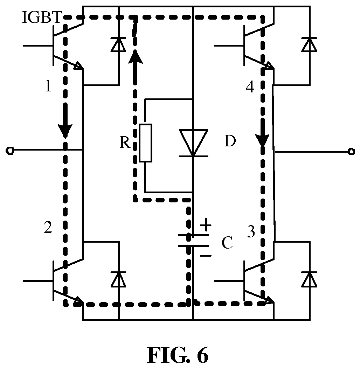

In the embodiments, when the capacitors of the full-bridge module units are charged, the full-bridge module units of the current transfer branch may be safely triggered due to a single-phase conduction characteristic of the diodes. As shown in FIG. 5, when an Insulated Gate Bipolar Transistor (IGBT) is conducted, a blocking capacitor voltage of the diode is discharged through a parallel resistor only, and thus is not discharged to the IGBT. As shown in FIG. 6 not being part of the invention, when the IGBT is conducted, the capacitor may be discharged to IGBTs at the upper and lower bridge arms through the resistor only, so that a discharge current of the capacitor to the IGBTs is limited below a safety level by using the resistor. Since the voltage of the capacitor is not larger than a withstanding voltage of the IGBT, the resistor R is required to have relatively low resistance and power, thereby eliminating difficulties in design

In addition, the full-bridge module unit shown in FIG. 6 not being part of the invention adopts a structure that the resistor, after being connected with the diode in parallel, is connected in series with the capacitor, so that a leakage current caused by a system voltage after breaking of the direct current circuit breaker is completed may also be essentially eliminated, and continuous heating of the resistor is avoided.

Therefore, the invention may implement quick reclosing of the cascaded full-bridge high-voltage direct current circuit breaker within several milliseconds, and moreover, may extend an application range of the cascaded full-bridge direct current circuit breaker and further improve operation reliability and economy of a flexible multi-terminal and direct current grid. Furthermore, the embodiments of the invention may further greatly reduce resistance and power of the resistors in the full-bridge module units, facilitate arrangement of the resistors in a structural design and improve operation reliability of the full-bridge module units. In addition, the leakage current of the corresponding failure system after breaking of the direct current circuit breaker may be reduced and essentially eliminated, and isolation of a healthy system from a failure point may be implemented more reliably.

### INDUSTRIAL APPLICABILITY

The embodiments of the invention may implement quick reclosing of the cascaded full-bridge high-voltage direct current circuit breaker within several milliseconds, and may extend the application range of the cascaded full-bridge direct current circuit breaker and further improve the operation reliability and economy of the flexible multi-terminal and direct current grid. In addition, the resistance and power of the resistors in the full-bridge module units may further be greatly reduced, arrangement of the resistors in the structural design is facilitated, and the operation reliability of the full-bridge module units is improved. Moreover, the leakage current of the corresponding failure system after breaking of the direct current circuit breaker may be reduced and essentially eliminated, and isolation of the healthy system from the failure point may be implemented more reliably.

## Claims

1. A cascaded full-bridge high-voltage direct current circuit breaker, the direct current circuit breaker comprising a primary through-current branch, a current transfer branch and an energy absorption branch, which are connected in parallel;
the primary through-current branch comprising a mechanical switch and a full-bridge module circuit connected in series, the full-bridge module circuit comprising at least 2n full-bridge module units, and n is greater than or equal to 1;
the current transfer branch comprising at least two full-bridge module units connected in series; and
the energy absorption branch comprising a lightning arrester;
wherein each full-bridge module unit comprises a first resistor (R), a first capacitor (C) and four full-controlled power electronic devices (1, 2, 3, 4);
the four full-controlled power electronic devices (1, 2, 3, 4) form a power module of a full-bridge structure, wherein a first full-controlled power electronic device (1) and a second full-controlled power electronic device (4) are arranged in series forming an upper bridge arm of the power module, and wherein a third full-controlled power electronic device (2) and a fourth full-controlled power electronic device (3) are arranged in series forming a lower bridge arm of the power module, the upper bridge arm of the power module being arranged in parallel to the lower bridge arm of the power module; and
the first resistor (R) is connected in parallel with two ends of the first capacitor (C), **characterized in that** each full-bridge module further comprises a first diode (D);
the first capacitor (C) and the first diode (D), being connected in series, are connected between the upper bridge arm of the power module, between the first full-controlled power electronic device (1) and the second full-controlled power electronic device (4) of said upper bridge arm, on the one hand, and the lower bridge arm of the power module, between the third full-controlled power electronic device (2) and the fourth full-controlled power electronic device (3) of the lower bridge arm, on the other hand, so that when an Insulated Gate Bipolar Transistor, IGBT, is conducted, a blocking capacitor voltage of the first diode (D) is discharged through the parallel first resistor (R) only, and is not discharged to the IGBT.

2. The cascaded full-bridge high-voltage direct current circuit breaker according to claim 1, wherein the full-bridge module circuit in the primary through-current branch is formed by at least one full-bridge module parallel branch connected in series; and
the full-bridge module parallel branch is formed by at least two full-bridge module units connected in parallel.

3. The cascaded full-bridge high-voltage direct current circuit breaker according to claim 1, wherein the number of the full-bridge module units in the current transfer branch is much larger than the number of the full-bridge module units in the primary through-current branch.

## Patentansprüche

1. Kaskadierter Vollbrücken-Hochspannungs-Gleichstromschutzschalter, wobei der Gleichstromschutzschalter einen primären Durchgangsstromzweig, einen Stromübertragungszweig und einen Energieabsorptionszweig umfasst, die parallel geschaltet sind;
wobei der primäre Durchgangsstromzweig einen mechanischen Schalter und eine in Reihe geschaltete Vollbrücken-Modul-Schaltung umfasst, wobei die Vollbrücken-Modul-Schaltung mindestens 2n Vollbrücken-Modul-Einheiten umfasst und n größer oder gleich 1 ist;
wobei der Stromübertragungszweig mindestens zwei in Reihe geschaltete Vollbrücken-Modul-Einheiten umfasst; und
wobei der Energieabsorptionszweig einen Blitzableiter umfasst;
wobei jede Vollbrücken-Modul-Einheit einen ersten Widerstand (R), einen ersten Kondensator (C) und vier vollgesteuerte Leistungselektronikvorrichtungen (1, 2, 3, 4) umfasst;
wobei die vier vollgesteuerten Leistungselektronikvorrichtungen (1, 2, 3, 4) ein Leistungsmodul einer Vollbrücken-Struktur bilden, wobei eine erste vollgesteuerte Leistungselektronikvorrichtung (1) und eine zweite vollgesteuerte Leistungselektronikvorrichtung (4) in Reihe angeordnet sind und einen oberen Brückenzweig des Leistungsmoduls bilden, und wobei eine dritte vollgesteuerte Leistungselektronikvorrichtung (2) und eine vierte vollgesteuerte Leistungselektronikvorrichtung (3) in Reihe angeordnet sind und einen unteren Brückenzweig des Leistungsmoduls bilden, wobei der obere Brückenzweig des Leistungsmoduls parallel zum unteren Brückenzweig des Leistungsmoduls angeordnet ist; und
wobei der erste Widerstand (R) parallel zu zwei Enden des ersten Kondensators (C) geschaltet ist,
**dadurch gekennzeichnet, dass** jedes Vollbrücken-Modul zudem eine erste Diode (D) umfasst;
der erste Kondensator (C) und die erste Diode (D), die in Reihe geschaltet sind, zwischen dem oberen Brückenzweig des Leistungsmoduls, zwischen der ersten vollgesteuerten Leistungselektronikvorrichtung (1) und der zweiten vollgesteuerten Leistungselektronikvorrichtung (4) des oberen Brückenzweigs einerseits und dem unteren Brückenzweig des Leistungsmoduls andererseits und zwischen der dritten vollgesteuerten Leistungselektronikvorrichtung (2) und der vierten vollgesteuerten Leistungselektronikvorrichtung (3) des unteren Brückenzweigs andererseits angeschlossen sind, so dass, wenn ein Bipolartransistor mit isolierter Gate-Elektrode (Insulated Gate Bipolar Transistor - IGBT) leitend ist, eine Sperrkondensatorspannung der ersten Diode (D) nur über den parallelen ersten Widerstand (R) entladen wird und nicht an den IGBT entladen wird.

2. Kaskadierter Vollbrücken-Hochspannungs-Gleichstromschutzschalter nach Anspruch 1, wobei die Vollbrücken-Modul-Schaltung im primären Durchgangsstromzweig durch mindestens einen in Reihe geschalteten Vollbrücken-Modul-Parallelzweig gebildet wird; und
wobei der Vollbrücken-Modul-Parallelzweig durch mindestens zwei parallel geschaltete Vollbrücken-Modul-Einheiten gebildet wird.

3. Kaskadierter Vollbrücken-Hochspannungs-Gleichstromschutzschalter nach Anspruch 1, wobei die Anzahl der Vollbrücken-Modul-Einheiten im Stromübertragungszweig wesentlich größer ist als die Anzahl der Vollbrücken-Modul-Einheiten im primären Durchgangsstromzweig.

## Revendications

1. Disjoncteur à courant continu haute tension à pont complet en cascade, le disjoncteur à courant continu comprenant une branche de courant traversant primaire, une branche de transfert de courant et une branche d'absorption d'énergie, qui sont connectées en parallèle,
la branche de courant traversant primaire comprenant un commutateur mécanique et un circuit de module en pont complet connectés en série, le circuit de module en pont complet comprenant au moins 2n unités de module en pont complet, et n est supérieur ou égal à 1 ;
la branche de transfert de courant comprenant au moins deux unités de module en pont complet connectées en série ; et
la branche d'absorption d'énergie comprenant un parafoudre ;
dans lequel chaque unité de module en pont complet comprend une première résistance (R), un premier condensateur (C) et quatre dispositifs électroniques de puissance entièrement commandés (1, 2, 3, 4)
les quatre dispositifs électroniques de puissance entièrement commandés (1, 2, 3, 4) forment un module de puissance d'une structure en pont complet, dans lequel un premier dispositif électronique de puissance entièrement commandé (1) et un deuxième dispositif électronique de puissance entièrement commandé (4) sont disposés en série formant un bras de pont supérieur du module de puissance, et dans lequel un troisième dispositif électronique de puissance entièrement commandé (2) et un quatrième dispositif électronique de puissance entièrement commandé (3) sont disposés en série formant un bras de pont inférieur du module de puissance, le bras de pont supérieur du module de puissance étant disposé parallèlement au bras de pont inférieur du module de puissance ; et
la première résistance (R) est connectée en parallèle avec deux extrémités du premier condensateur (C), **caractérisé en ce que** chaque module en pont complet comprend en outre une première diode (D) ;
le premier condensateur (C) et la première diode (D), connectés en série, sont connectés entre le bras de pont supérieur du module de puissance, entre le premier dispositif électronique de puissance entièrement commandé (1) et le deuxième dispositif électronique de puissance entièrement commandé (4) dudit bras de pont supérieur, d'une part, et le bras de pont inférieur du module de puissance, entre le troisième dispositif électronique de puissance entièrement commandé (2) et le quatrième dispositif électronique de puissance entièrement commandé (3) du bras de pont inférieur, d'autre part, de sorte que lorsqu'un transistor bipolaire à grille isolée, IGBT, conduit, une tension de condensateur de blocage de la première diode (D) est déchargée à travers la première résistance parallèle (R) uniquement, et n'est pas déchargée à l'IGBT.

2. Disjoncteur à courant continu haute tension à pont complet en cascade selon la revendication 1, dans lequel le circuit de module en pont complet dans la branche de courant traversant primaire est formé par au moins une branche parallèle de module en pont complet connectée en série ; et
la branche parallèle de module en pont complet est formée par au moins deux unités de module en pont complet connectées en parallèle.

3. Disjoncteur à courant continu haute tension à pont complet en cascade selon la revendication 1, dans lequel le nombre d'unités de module en pont complet dans la branche de transfert de courant est beaucoup plus grand que le nombre d'unités de module en pont complet dans la branche à courant traversant primaire.
